# FASCICULE DE BREVET EUROPEEN

(11) **EP 0 822 643 B1**
(45) Date de publication et mention de la délivrance du brevet: **02.01.2002**
(21) Numéro de dépôt: 97401814.5
(22) Date de dépôt: 28.07.1997
(51) Int. Cl.: H02K 11/04

(54) **Dissipateur pour pont redresseur d'alternateur de véhicule automobile, ensemble redresseur et alternateur comportant de tels dissipateurs**
Wärmesenke für Kraftwagengeneratorbrückengleichrichtervorrichtung, Gleichrichtergeneratoreinheit mit einer solchen Wärmesenke
Heat sink for car alternator rectifier bridge and alternator rectifier unit having such a heat sink

(30) Priorité: 30.07.1996 FR 9609587
(43) Date de publication de la demande: 04.02.1998
(73) Titulaire: VALEO EQUIPEMENTS ELECTRIQUES MOTEUR, 94000 Créteil (FR)
(72) Inventeur: Abadia, Roger, 93360 Neuilly-Plaisance (FR); Dubus, Jean-Marc, 94380 Bonneuil Sur Marne (FR); Gautier, Jean, 49124 Saint Barthelemy d'Anjou (FR); Richard, Daniel, 94440 Marolles en Brie (FR); Tranchon, Georges, 94000 Creteil (FR)
(74) Mandataire: Le Forestier, Eric

(56) Documents cités:
- EP-A- 0 388 953
- US-A- 3 684 944
- PATENT ABSTRACTS OF JAPAN vol. 017, no. 593 (E-1454), 28 octobre 1993 & JP 05 176505 A (NIPPONDENSO CO LTD), 13 juillet 1993,

## Description

La présente invention est relative aux alternateurs de véhicules automobiles et à leurs redresseurs à ponts de diodes.

Elle concerne plus particulièrement les dissipateurs thermiques de ces redresseurs à ponts de diodes.

L'invention trouve en particulier avantageusement application dans le cas de ponts redresseurs dont les diodes positives sont portées par une ou plusieurs pièces métalliques formant dissipateur thermique rapportées sur le flasque arrière de la carcasse de l'alternateur, tandis que les diodes négatives sont directement montées sur ledit flasque, au droit d'évidements que présentent la ou lesdites pièces.

Les configurations de redresseur de ce type sont utilisées aussi bien pour des montages statoriques en triangle, que pour des montages statoriques en étoile avec une diode positive par phase et éventuellement une diode positive pour le redressement du point neutre.

Toutefois, ces montages posent des problèmes de dissipation thermique.

En particulier, dans le cas du montage en triangle, on constate des surchauffes, notamment pour les diodes du milieu, pour des intensités de courant supérieures à 110 Ampères environ.

Un redresseur à ponts de diodes selon l'art antérieur est décrit dans le document EP-A-0 388 953.

Un but de l'invention est donc de proposer un montage permettant une meilleure dissipation thermique que les montages conventionnels.

A cet effet, l'invention propose un dissipateur thermique pour pont redresseur d'alternateur de véhicule automobile, comportant un secteur en un matériau thermiquement conducteur qui est destiné à être rapporté sur l'alternateur et qui présente des logements pour recevoir les diodes positives du pont redresseur, caractérisé en ce qu'il comporte un deuxième secteur en un matériau thermiquement conducteur, ainsi que des moyens pour la fixation du deuxième secteur sur le premier au droit des orifices que celui-ci présente pour recevoir les diodes positives.

Une telle configuration est d'une grande compacité et présente dans un volume réduit des surfaces d'échange importantes, de sorte que l'air qui circule au niveau du pont redresseur évacue le maximum de calories.

Un tel dissipateur peut être utilisé de façon fiable avec des alternateurs dont l'intensité de courant est susceptible d'atteindre 130 Ampères environ.

On notera que le problème pourrait être résolu avec une pièce massive unique à deux étages mais avec pour conséquence les inconvénients suivants :
- la présence du dissipateur additionnel n'est nécessaire que pour les plus fortes gammes de puissance, la conception d'une pièce unique aurait pour conséquence une pénalisation de coût pour les gammes de puissance les plus faibles,
- pour éliminer ce surcoût, il serait alors nécessaire de prévoir deux dissipateurs différents suivant les gammes de puissance,
- enfin, la surface occupée par un tel dissipateur ne permettrait plus un montage des diodes aisé, voir le rendrait impossible.

Le fait d'avoir un dissipateur séparé élimine les inconvénients ci-dessus et permet en plus de le concevoir en un matériau différent du dissipateur principal, matériau qui peut être moins cher et plus performant sur le plan de la dissipation thermique.

D'autres avantages de l'invention ressortiront encore de la description qui suit. Cette description est purement illustrative et non limitative. Elle doit être lue en regard des dessins annexés sur lesquels :
- la figure 1 est une vue de dessus du flasque arrière d'un alternateur conforme à un mode de réalisation possible pour l'invention ;
- la figure 2 est une vue de dessus d'une des pièces du dissipateur monté sur le flasque de la figure 1 ;
- la figure 3 est une vue de dessus d'une deuxième pièce de ce dissipateur ;
- la figure 4 est un schéma d'un montage électrique d'un pont redresseur conforme à un mode de réalisation possible de l'invention.

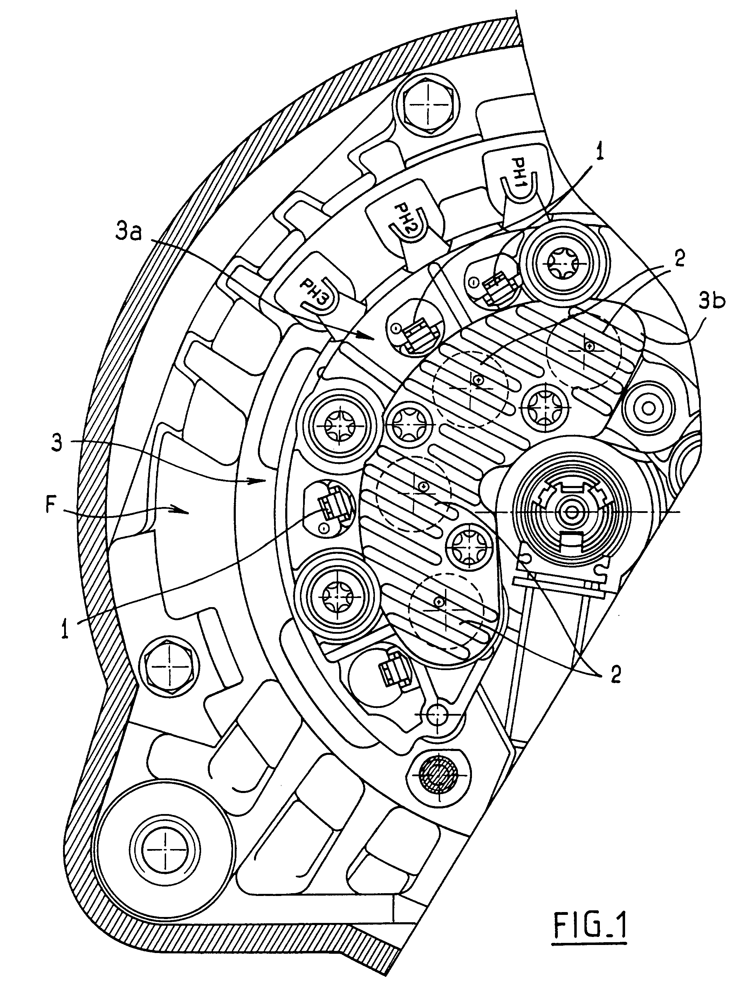

Sur la figure 1, on a référencé par F le flasque arrière d'alternateur qui y est représenté.

Dans l'exemple illustré sur cette figure, le pont redresseur monté sur ce flasque F comporte trois diodes négatives 1 qui sont montées directement sur ledit flasque F, ainsi que quatre diodes positives 2 qui sont quant à elles montées sur un ensemble dissipateur 3 fixé sur le flasque F.

Cet ensemble dissipateur 3 est constitué de deux secteurs métalliques 3a et 3b rapportés l'un sur l'autre.

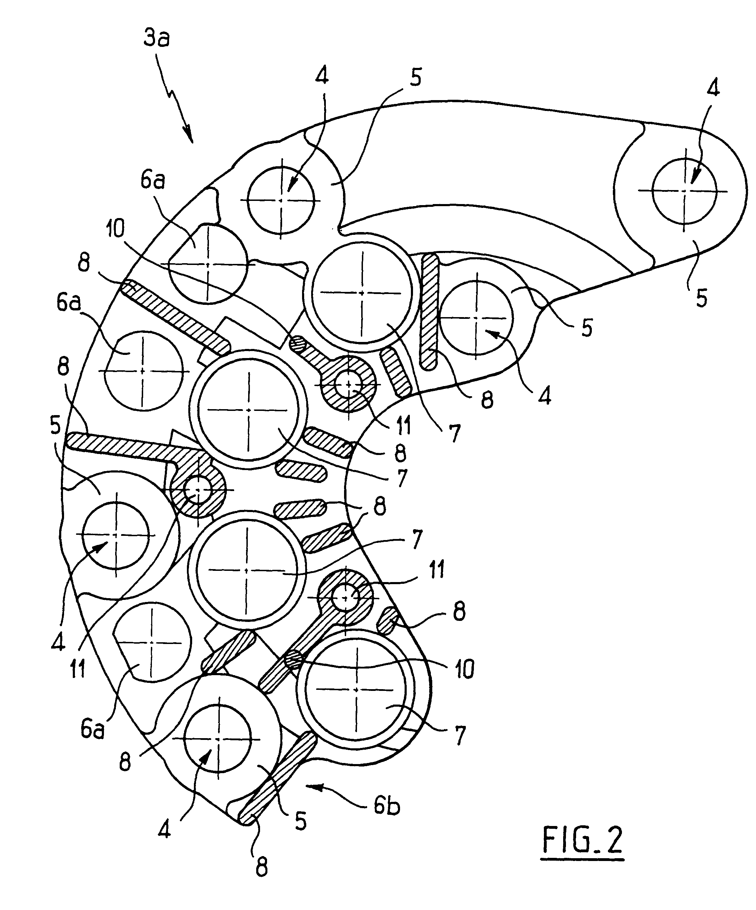

Le secteur métallique 3a a été plus particulièrement représenté sur la figure 2.

Il présente une forme arquée principalement plane.

Il est vissé sur le flasque F et présente à cet effet une pluralité d'orifices de vissage 4 répartis sur sa surface et destinés à être traversés par des vis de fixation reçues dans des alésages filetés complémentaires que présente le flasque F.

Sur sa face opposée au flasque F et qui est représentée sur la figure 2, ledit secteur 3a présente autour des orifices 4 des creusures 5 destinées à recevoir des rondelles sur lesquelles les têtes de vis viennent en appui. Ces rondelles sont en des matériaux électriquement isolants. Elles permettent d'isoler la tête de la vis par rapport au secteur 3a.

Dans l'exemple illustré sur les figures 1 et 2, les orifices 4 sont au nombre de cinq. L'un est disposé au niveau d'une extrémité dudit secteur 3a, où ledit secteur présente une largeur sensiblement plus étroite que dans le reste de l'arc qu'il définit, trois autres étant répartis à proximité immédiate de son bord arqué extérieur, le dernier étant disposé à proximité immédiate de son bord arqué intérieur.

Ce secteur 3a présente par ailleurs, également au voisinage de son bord arqué extérieur, trois orifices d'accès 6a qui sont répartis de façon à se trouver au droit des trois diodes négatives 1 lorsque le secteur 3a est en place sur le flasque F.

Le secteur 3a présente en outre dans le prolongement de l'arc sur lequel les orifices 6a sont situés et au niveau de son extrémité qui présente la largeur la plus importante, un décrochement 6b qui se trouve, lorsque le secteur 3a est en place sur le flasque F, au droit d'une zone dudit flasque F où pourrait être logée une quatrième diode négative, par exemple dans le cas d'un stator d'alternateur à bobinages en étoile avec redressement du point neutre.

Le secteur 3a présente par ailleurs quatre orifices 7 destinés à recevoir les diodes positives 2 du pont redresseur. Ces orifices 7 sont répartis selon un arc situé entre le bord arqué intérieur du secteur et les orifices 6a.

Une pluralité d'ailettes de refroidissement 8 s'étend en saillie sur la face dudit secteur 3a opposée au flasque F. Ces ailettes s'étendent sensiblement radialement sur ladite face si l'on se réfère à la courbure dudit secteur arqué.

Une série de petites ailettes est disposée entre le bord arqué intérieur du secteur 3a et les orifices 7, à proximité immédiate desdits orifices 7. D'autres ailettes sont réparties entre les orifices 7 ou s'étendent tangentiellement le long de ceux-ci. D'autres ailettes encore sont disposées au niveau de l'arc que définit les orifices 6a.

Le secteur 3a comporte des moyens pour la fixation du secteur 3b sur sa face opposée au flasque F.

Ces moyens comprennent en particulier des pions 10 destinés à s'engager dans des évidements complémentaires que présente le secteur 3b, ainsi que trois orifices 11 destinés à permettre, avec des orifices complémentaires que présente le secteur 3b, la fixation par vissage dudit secteur 3b sur ledit secteur 3a.

Dans l'exemple illustré sur la figure 2, les orifices 11 sont définis au niveau de surépaisseurs cylindriques que présentent à leur extrémité trois ailettes 8. Les pions 10 sont disposés au niveau de deux de ces ailettes.

Ainsi qu'on peut le voir sur la figure 1, le secteur 3b - qui a une forme en haricot - s'étend sur un arc de cercle moins important que le secteur 3a et présente également une largeur moins importante.

Il se superpose au secteur 3a au droit des quatre orifices 7, en étant alors en appui sur une partie des ailettes 8, et en particulier sur celle de ces ailettes qui sont situées entre les orifices 7 et le bord arqué intérieur du secteur 3a.

Lorsqu'il est en place sur le secteur 3a, il recouvre lesdits orifices 7.

La forme de son bord intérieur arqué coïncide sensiblement avec celle du bord intérieur arqué du secteur 3a.

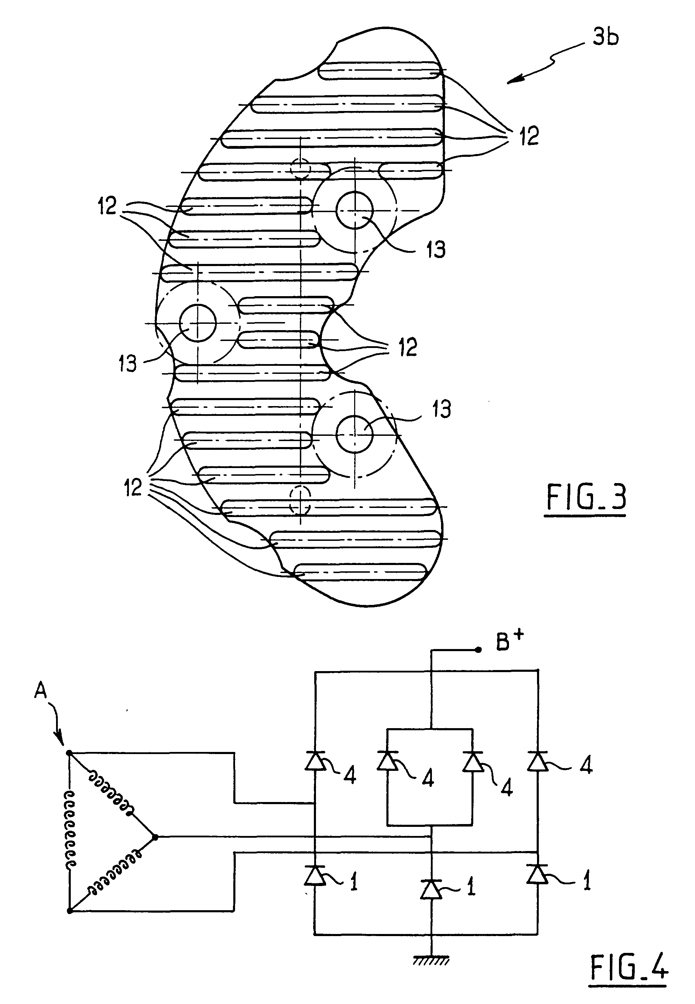

Ce secteur 3b a été plus particulièrement représenté sur la figure 3.

Il présente sur sa face opposée au secteur 3a une pluralité d'ailettes de refroidissement 12.

Ces ailettes 12 sont parallèles à son plan médian radial et régulièrement réparties sur sa surface.

Ce secteur 3b présente également trois orifices de fixation 13 destinés à coïncider avec les orifices 11, ainsi que deux évidements 14 destinés à recevoir les pions 10.

Ce secteur 3b est rapporté sur le secteur 3a et fixé à celui-ci une fois les diodes négatives 1 montées sur le flasque F.

Le montage qui vient d'être décrit assure une bonne dissipation de la surchauffe au niveau des diodes positives dudit pont redresseur.

On notera qu'il est important que les deux secteurs 3a et 3b constituent deux pièces distinctes et ne soient pas d'une pièce.

Ceci permet une réalisation à moindre coût par rapport à une pièce unique à deux étages et facilite le montage des diodes.

Ceci permet également de réaliser le dissipateur séparé en un matériau différent de celui du dissipateur principal.

Des moyens de fixation par vissage sont préférés.

Les dissipateurs que constituent les secteurs 3a et 3b sont par exemple moulés en aluminium ou en tout matériau à haute conductivité thermique, le secteur 3b pouvant être en un matériau différent de celui du secteur 3a.

Ainsi que cela a été indiqué précédemment, dans l'exemple qui vient d'être décrit, les diodes négatives 1 sont au nombre de trois, tandis que les diodes positives sont au nombre de quatre.

Le montage de ces différentes diodes est celui qui est illustré sur la figure 4.

Ainsi qu'on peut le voir sur cette figure, deux des diodes positives sont montées en parallèle.

On notera qu'un tel dédoublement permet d'éviter une surchauffe des diodes positives.

Avantageusement, ce sont les deux diodes du milieu qui sont montées en parallèle, la diode du milieu étant sur un montage classique celle au niveau de laquelle les pertes joules sont les plus importantes. Le dédoublement pourrait toutefois également intervenir sur des diodes latérales.

Un nombre de diodes montées en parallèle supérieur à deux pourrait bien entendu être envisagé.

Le montage illustré sur la figure 4 correspond à un montage possible dans le cas d'un stator A d'alternateur à trois enroulements montés en triangle.

Comme on l'aura compris, le dissipateur qui vient d'être décrit présente l'avantage de pouvoir tout aussi bien être utilisé dans le cas d'un stator à enroulements en étoile, avec un pont redresseur à quatre diodes positives et quatre diodes négatives pour le redressement du point neutre.

La quatrième diode est alors logée sur le flasque F, au droit du décrochement 6b.

Ainsi, le dissipateur qui vient d'être décrit est d'une grande souplesse d'utilisation.

D'autres variantes de réalisation que celles qui vient d'être décrites sont bien entendu possible. En particulier, les secteurs 3a et/ou 3b peuvent ne pas comporter d'ailettes de refroidissement.

## Revendications

1. Dissipateur thermique pour pont redresseur d'alternateur (A) de véhicule automobile, comportant un secteur (3a) en un matériau thermiquement conducteur qui est destiné à être rapporté sur l'alternateur (A) et qui présente des logements (7) pour recevoir les diodes positives (2) du pont redresseur, **caractérisé en ce qu'**il comporte un deuxième secteur (3b) en un matériau thermiquement conducteur, ainsi que des moyens (10, 11) pour la fixation du deuxième secteur (3b) sur le premier (3a) au droit des orifices que celui-ci présente pour recevoir les diodes positives (2).

2. Dissipateur thermique selon la revendication 1, **caractérisé en ce que** les moyens pour la fixation des deux secteurs (3a, 3b) l'un sur l'autre sont des moyens de vissage.

3. Dissipateur thermique selon l'une des revendications précédentes, **caractérisé en ce que** le premier secteur (3a) présente au moins quatre orifices (7) pour recevoir des diodes positives (2) du pont redresseur.

4. Dissipateur thermique selon la revendication 3, **caractérisé en ce que** le premier secteur présente un décrochement (6b) et trois orifices (6a), ledit décrochement (6b) et lesdits orifices (6a) étant destinés à permettre l'accès à quatre zones d'implantation de diodes négatives (1) sur l'alternateur (A).

5. Ensemble redresseur pour alternateur de véhicule automobile comportant un pont de diodes redresseur, **caractérisé en ce que** les diodes positives (2) dudit pont sont montées sur un dissipateur thermique (3) selon l'une des revendications précédentes.

6. Ensemble redresseur selon la revendication 5, **caractérisé en ce qu'**au moins deux des diodes positives (2) sont montées en parallèle l'une par rapport à l'autre.

7. Ensemble redresseur selon la revendication 6, **caractérisé en ce qu'**il comporte au moins quatre diodes positives (2) sensiblement réparties en arc de cercle sur le premier secteur et **en ce que** les deux diodes positives montées en parallèle sont disposées entre deux diodes positives latérales.

8. Alternateur de véhicule automobile à bobinages statoriques en triangle, **caractérisé en ce qu'**il comporte un ensemble redresseur (3) selon l'une des revendications 6 ou 7.

9. Alternateur de véhicule automobile à bobinages statoriques en étoile, **caractérisé en ce qu'**il comporte un ensemble redresseur (3) selon la revendication 5.

10. Alternateur selon la revendication 9, **caractérisé en ce qu'**il comporte un dissipateur thermique selon la revendication 4 et **en ce que** son pont redresseur présente quatre diodes négatives (1), dont l'une est disposée au droit du décrochement (6b) de son premier secteur (3a) et dont les trois autres sont disposées au droit des trois orifices d'accès (6a) que présente ledit premier secteur.

## Patentansprüche

1. Kühlkörper für eine Gleichrichterbrücke eines Wechselstromgenerators (A) für Kraftfahrzeuge, der ein Segment (3a) aus einem wärmeleitenden Material umfaßt, das dazu bestimmt ist, am Wechselstromgenerator (A) angebracht zu werden, und das Aufnahmen (7) zum Einsetzen der Plusdioden (2) der Gleichrichterbrücke aufweist, **dadurch gekennzeichnet, daß** er ein zweites Segment (3b) aus wärmeleitendem Material sowie Mittel (10, 11) zur Befestigung des zweiten Segments (3b) am ersten (3a) in Höhe der Öffnungen umfaßt, die dieses für das Einsetzen der Plusdioden (2) aufweist.

2. Kühlkörper nach Anspruch 1, **dadurch gekennzeichnet, daß** die Mittel zur Befestigung der beiden Segmente (3a, 3b) aneinander Schraubmittel sind.

3. Kühlkörper nach einem der vorangehenden Ansprüche, **dadurch gekennzeichnet, daß** das erste Segment (3a) wenigstens vier Öffnungen (7) für das Einsetzen der Plusdioden (2) der Gleichrichterbrücke aufweist.

4. Kühlkörper nach Anspruch 3, **dadurch gekennzeichnet , daß** das erste Segment einen Absatz (6b) und drei Öffnungen (6a) aufweist, wobei der besagte Absatz (6b) und die besagten Öffnungen (6a) dazu bestimmt sind, den Zugang zu vier Bereichen für die Anordnung der Minusdioden (1) am Wechselstromgenerator (A) zu ermöglichen.

5. Gleichrichtereinheit für einen Kraftfahrzeug-Wechselstromgenerator, die einen Diodenbrückengleichrichter umfaßt, **dadurch gekennzeichnet, daß** die Plusdioden (2) der besagten Brückenschaltung an einem Kühlkörper (3) nach einem der vorangehenden Ansprüche angebracht sind.

6. Gleichrichtereinheit nach Anspruch 5, **dadurch gekennzeichnet, daß** wenigstens zwei der Plusdioden (2) parallel zueinander geschaltet sind.

7. Gleichrichtereinheit nach Anspruch 6, **dadurch gekennzeichnet, daß** sie wenigstens vier Plusdioden (2) umfaßt, die in etwa kreisbogenförmig auf dem ersten Segment verteilt sind, und daß die zwei parallel geschalteten Plusdioden zwischen zwei seitlichen Plusdioden angeordnet sind.

8. Kraftfahrzeug-Wechselstromgenerator mit Ständerwicklungen in Dreieckschaltung, **dadurch gekennzeichnet, daß** er eine Gleichrichtereinheit (3) nach einem der Ansprüche 6 oder 7 umfaßt.

9. Kraftfahrzeug-Wechselstromgenerator mit Ständerwicklungen in Sternschaltung, **dadurch gekennzeichnet, daß** er eine Gleichrichtereinheit (3) nach Anspruch 5 umfaßt.

10. Wechselstromgenerator nach Anspruch 9, **dadurch gekennzeichnet, daß** er einen Kühlkörper nach Anspruch 4 umfaßt und daß seine Gleichrichterbrücke vier Minusdioden (1) aufweist, von denen eine in Höhe des Absatzes (6b) seines ersten Segments (3a) angeordnet ist und von dem die drei anderen in Höhe der drei Zugangsöffnungen (6a) angeordnet sind, die das besagte erste Segment aufweist.

## Claims

1. Heat dissipater for the bridge rectifier of an alternator (A) in a motor vehicle, having a sector (3a) made from a heat-conducting material which is intended to be attached to the alternator (A) and which has housings (7) for receiving the positive diodes (2) of the bridge rectifier, **characterised in that** it has a second sector (3b) made from a heat-conducting material, as well as means (10, 11) for fixing the second sector (3b) to the first (3a) in line with the orifices which it has for receiving the positive diodes (2).

2. Heat dissipater according to Claim 1, **characterised in that** the means for fixing the two sectors (3a, 3b) to each other are screwing means.

3. Heat dissipater according to one of the preceding claims, **characterised in that** the first sector (3a) has at least four orifices (7) for receiving positive diodes (2) of the bridge rectifier.

4. Heat dissipater according to Claim 3, **characterised in that** the first sector has a step (6b) and three orifices (6a), the said step (6b) and the said orifices (6a) being intended to allow access to four areas of location of negative diodes (1) on the alternator (A).

5. Rectifier assembly for a motor vehicle alternator including a diode bridge rectifier, **characterised in that** the positive diodes (2) of the said bridge are mounted on a heat dissipater (3) according to one of the preceding claims.

6. Rectifier assembly according to Claim 5, **characterised in that** at least two of the positive diodes (2) are connected in parallel with respect to each other.

7. Rectifier assembly according to Claim 6, **characterised in that** it has at least four positive diodes (2) substantially distributed in an arc of a circle on the first sector and **in that** the two positive diodes connected in parallel are disposed between two lateral positive diodes.

8. Motor vehicle alternator with stator windings in a triangle, **characterised in that** it has a rectifier assembly (3) according to one of Claims 6 or 7.

9. Motor vehicle alternator with stator windings in a star, **characterised in that** it has a rectifier assembly (3) according to Claim 5.

10. Alternator according to Claim 9, **characterised in that** it has a heat dissipater according to Claim 4 and **in that** its bridge rectifier has four negative diodes (1), one of which is disposed in line with the step (6b) on its first sector (3a) and the other three of which are disposed in line with the three access orifices (6a) which the said first sector has.
